# EUROPÄISCHE PATENTSCHRIFT

(11) **EP 0 710 512 B1**
(45) Veröffentlichungstag und Bekanntmachung des Hinweises auf die Patenterteilung: **10.05.2000**
(21) Anmeldenummer: 94116115.0
(22) Anmeldetag: 12.10.1994
(51) Int. Cl.: B09B 3/00, B29B 17/02, B65B 69/00

(54) **Verfahren und Einrichtung zum Rückgewinnen von Pack- und Inhaltstoffen**
Method and device for recovering packaging materials and their contents
Procédé et dispositif pour récupérer des matériaux d'emballage et leur contenu

(43) Veröffentlichungstag der Anmeldung: 08.05.1996
(73) Patentinhaber: NORDISCHER MASCHINENBAU RUD. BAADER GMBH + CO KG, 23560 Lübeck (DE)
(72) Erfinder: Becker, Günter, D-27628 Bramstedt (DE); bredehöft, Joachim, D-27404 Rhade (DE)
(74) Vertreter: Patentanwälte Wenzel & Kalkoff

(56) Entgegenhaltungen:
- EP-A- 0 394 625
- EP-A- 0 421 078
- EP-A- 0 542 458
- DE-C- 3 111 625
- FR-A- 2 622 172
- US-A- 3 396 768
- Prospekt: Baader Food Processing Machinery 9/96 1000 D GR.

## Beschreibung

Die Erfindung bezieht sich auf ein Verfahren zum Rückgewinnen von Pack- und Inhaltsstoffen, insbesondere aus mit Weichstoffen gefüllten oder benetzten Packungseinheiten, beispielsweise Lebensmittelpackungen, wie Butter-, Käse-, Joghurt-, Wurstpackungen, Packungen für Fertiggerichte u.ä. zwecks Weiter- oder Wiederverwertung der Pack- und/oder Inhaltsstoffe, sowie eine Einrichtung zur Durchführung des Verfahrens, umfassend einen Zerkleinerer mit zwei um in wesentlichen horizontale und parallel verlaufende Achsen gegenläufig rotierenden Walzen und einem den Walzen unmittelbar nachgeschalteten Weichseparator zum Austreiben der Inhaltsstoffe aus den Packungseinheiten unter Druck.

Im Sinne einer Reduzierung der Umweltbelastung erlassene, immer restriktivere Müllverordnungen machen heutzutage das Entsorgen von Müll immer schwieriger. So verweigern inzwischen die meisten Deponien die Annahme von unsortiertem Müll, was insbesondere die Unternehmen in Bedrängnis bringt, bei denen ein manuelles oder maschinelles Trennverfahren aufgrund der relativ geringen Mengen unrentabel ist. Von dieser Situation sind vornehmlich Supermärkte oder kleinere Lebensmittelerzeuger etc. betroffen. Es etablieren sich daher mehr und mehr Sammel- und Sortierunternehmen, die sich der Aufgabe verschrieben haben, das anfallende Müllvolumen auf wirtschaftliche Art und Weise zu reduzieren, wobei sich das Interesse weiter darauf richtet, den wieder- bzw. weiterverwertbaren Teil einem Endverarbeiter in möglichst hochwertiger Form zur Verfügung zu stellen. Dies setzt in erster Linie eine weitgehend sortenreine Trennung der Müllstoffe voraus, was jedoch bei Packungen mit Inhalt, beispielsweise Lebensmittelpackungen, deren Verfallsdatum überzogen ist, naturgemäß nicht ohne weiteres möglich ist. Das gilt auch für Leerpackungen, die Füllgutreste beinhalten oder davon benetzt sind. Andererseits wären solche Packungen jedoch vollständig, d. h. Pack-und Inhaltstoffe, recykelbar, wenn eine Möglichkeit geschaffen würde, diese Stoffe auf wirtschaftliche Art und Weise zu trennen.

In der Fleischverarbeitung ist es bekannt, Einrichtungen einzusetzen, mit deren Hilfe eine Trennung der fließfähigen Bestandteile, wie Muskelfleisch und Fett, von nicht fließfähigen Bestandteilen, wie Sehnen, Häute, Fechten, Knorpel, Gräten und Knochen möglich ist.

Eine solche Vorrichtung ist beispielsweise aus der DE-A 20 32 774 zu entnehmen, die den grundsätzlichen Aufbau derartiger Maschinen wiedergibt. Die Arbeitsweise ist dabei so, daß das Preßgut zwischen Preßband und perforierter Mantelfläche der Hohltrommel gegeben und dort einem quasi hydraulischen Druck unterworfen wird. Dieser Druck bewirkt, daß die leichter fließenden Bestandteile des Preßgutes durch die Perforationen in die Hohltrommel abfließen, während die übrigen Bestandteile auf der Mantelfläche der Hohltrommel zurückbleiben.

Solche Separatoren werden inzwischen auch in anderen Sparten der Lebensmittelindustrie, wie z. B. in der Gemüse- und Obstverarbeitung eingesetzt wo diese Maschinen herangezogen werden, um z. B. Kartoffeln zu pürieren und bei Schalenobst das Fruchtfleisch von Schalen, Kernen und Stielen zu trennen Auch wurde bereits versucht, verdorbene oder in ihrem Haltbarkeitsdatum abgelaufene Lebensmittelpackungen entsprechend zu verarbeiten, um so die Stoffkomponenten zu trennen und wieder zu verwerten,

Dabei zeigen sich jedoch einige Probleme, die zu unbefriedigenden Ergebnissen führen. So besteht eine Schwierigkeit darin, daß das Einzugsvermögen des Separators insbesondere bei sperrigen Packungen unzureichend ist, so daß geeignete Hilfsaggregate wie beispielsweise Stopfeinrichtungen eingesetzt werden müssen, um diesem Mangel zu begegnen. Eine gravierende Unzulänglichkeit Zeigt sich jedoch in einem mangelhaften Trennungsgrad, dessen Ursache insbesondere darin liegt, daß die unter dem Preßdruck flach gepreßten Packungen Kavernen bilden, in denen Füllgutreste verbleiben, so daß einerseits der rückgewonnene Packstoff je nach Verwendung nur nach aufwendiger, mit hohen Wasserverbrauch und Entsorgungskosten verbundener Reinigung verwertbar ist und andererseits der Prozeß mit einem relativ hohen Ausbeuteverlust an Inhaltstoffen einhergeht.

Aus der FR-A-2 622 172 geht ein Verfahren zum Rückgewinnen von insbesondere Bleichmitteln aus Behältern ähnlich dem Oberbegriff des Verfahrensanspruchs 1 hervor. Bei diesem bekannten Verfahren werden die Behälter durch Kreismesser in einer oder gegenüberliegenden Wandung/en geschlitzt und danach unter drei getrennte, aufeinander folgende Preßmittel gefördert, um das Bleichmittel völlig aus den Behältern zu drängen. Vor Erreichen der zweiten und dritten Preßmittel werden außerdem die Behälter in eine neue Orientierung gebracht, um das Abfließen des Bleichmittels zu fördern.

Eine Einrichtung umfassend einen Zerkleinerer und einen diesem unmittelbar nachgeschalteten Weichseparator gemäß dem Oberbegriff des Anspruches 2 ist aus der JP-U-26-7881 bekannt. Die Einrichtung dient zur Bearbeitung von Fischen, wobei die Fische zunächst in Stücke geschnitten und das Fleisch dann mittels des Weichseparators von den Gräten getrennt wird. Zum Zerschneiden der Fische umfassen die Walzen des Zerkleinerers Reihen von sichelförmigen Messern. Diese Messer können zwar Fische erfolgreich zerstückeln, sind jedoch für verhältnismäßig starre oder elastische Packstoffe ungeeignet, da der Packstoff von den Spitzen der Messer aufgespießt und mitgenommen und dabei höchstens eingeschlitzt wird.

Der vorliegenden Erfindung liegt die Aufgabe zugrunde, die vorstehenden Mängel zu beheben.

Dies wird mit einem Verfahren der eingangs beschriebenen Art dadurch erreicht, daß die Packungseinheiten samt Inhaltsstoffen in Grobpartikel, die im wesentlichen frei von Inhaltsstoffe einschließenden Kavernen sind, zerrissen und zerschnitten und anschließend die Grobpartikel einem kontinuierlichen Druck unterworfen werden, um die Inhaltsstoffe von den Packstoffen auszutreiben. Zur Ausführung dieses Verfahrens ist eine Einrichtung vorgesehen, die dadurch gekennzeichnet ist, daß die Walzen jeweils eine Vielzahl unter Bildung von Radialnuten zueinander beabstandet angeordnete Scheiben aufweisen, die jeweils an ihrem äußeren Umfang mit Reißzähnen versehen und derart zueinander beabstandet sind, daß sie bei Rotation einander überschneiden, wobei die Reißzähne der einen Walze in die Radialnuten der anderen eintauchen, so daß auf den Scheiben befindliche Packungseinheiten durch die Reißzähne erfaßt und in die Radialnuten zwischen benachbarten Scheiben eingezogen und dabei in Grobpartikel zerschnitten und zerrissen werden.

Die mit dem Erfindungsgegenstand erzielbaren Vorteile bestehen insbesondere dann, daß die beiden Stoffkomponenten Packstoff und Inhaltstoffe auf direktem Wege weitgehend getrennt voneinander gewinnbar sind, so daß deren Weiterverarbeitung in der Regel ohne weitere Aufbereitung möglich ist.

Eine weitere Veredelung des auf diese Weise rückgewinnbaren Packstoffes kann je nach Packstoffart, insbesondere bei Kunststoffen, durch Vereinheitlichung der Partikelgröße mittels eines dem Weichseparator direkt nachgeschalteten Mahlwerkes erfolgen.

Der Vorteil einer solchen Granulierung zeigt sich insbesondere bei Kunststoffbechern für Molkereiprodukte, wie beispielsweise Sahne, Quark, Joghurt u. ä., die üblicherweise mit Alufolie versiegelt sind. Der Separator erzeugt bei eine Packstoffkomponente, die ein Gemisch aus beiden Stoffen umfaßt. Durch die bezeichnete Granulierung wird jedoch die Voraussetzung für eine Trennbarkeit dieser Stoffe durch bekannte Verfahren, beispielsweise unter Anwendung statischer Elektrizität, geschaffen.

Vorteilhaft kann das Mahlwerk aus einer Gebläsemühle bekannter Bauart bestehen, die zudem mit ihrem Saugstrom in idealer Weise dafür sorgt, daß die separierten Packstoff-Grobpartikel zügig gefördert werden und durch den Luftstrom erreicht wird, daß an den Partikeln anhaftende Feuchtigkeit weitgehend entfernt wird. Dieser letztgenannte Effekt läßt sich gezielt durch Verlängerung der Ansaugwege sowie geeigneter Ausgestaltung zwecks Verwirbelung während der Förderung optimieren.

Weitere vorteilhafte Ausführungen der erfindungsgemäßen Einrichtung sind den übrigen Unteransprüchen entnehmbar.

Die Erfindung wird nachstehend anhand eines in der Zeichnung dargestellten Ausführungsbeispiels näher erläutert. Es zeigen
- Fig. 1: eine Darstellung der Gesamtanlage inSeitenansicht,
- Fig. 2: eine Ansicht der Kombination aus Schredder und Separator,
- Fig. 3: eine perspektivische Darstellung der Gebläsemühle in Reinigungsstellung.

Die erfindungsgemäße Gesamteinrichtung besteht aus einem Vorzerkleinerer (Schredder) 1 , einem Separator 2 des Lochtrommel-Preßband-Typs, einem Feinzerkleinerer 3 und einem über eine Rohrleitung 4 mit diesem verbundenen Zyklon 5 .

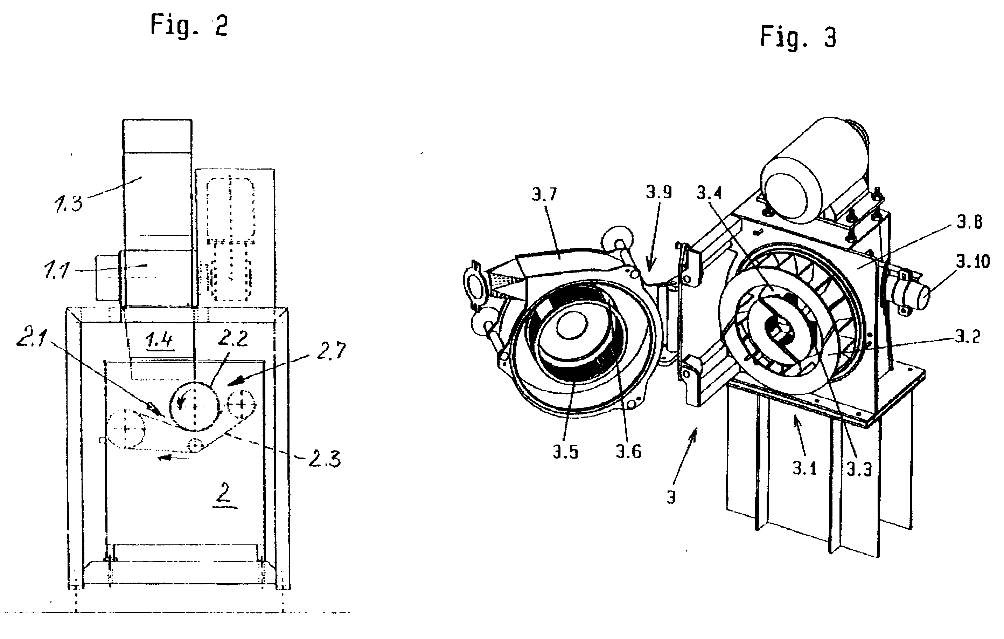

Der Vorzerkleinerer 1 weist ein Paar in einem Gehäuse 1.1 gelagerter, gegensinnig umlaufend angetriebener Walzen 1.2 aus einer Vielzahl von distanziert unter Bildung von Radialnuten zueinander angeordneten Scheiben auf, die mit Reißzähnen an ihrem äußeren Umfang ausgebildet sind. Die Anordnung der Walzen 1.2 ist so getroffen, daß sich die Umlaufkreise der Scheiben überschneiden, 50 daß die Reißzähne wechselseitig in die Radialnuten eintauchen. Dabei sind die Umlaufgeschwindigkeiten der Walzen 1.2 vorzugsweise unterschiedlich. Der Vorzerkleinerer hat einen Eingabeschacht 1.3 und einen abführseitigen Auffangschacht 1.4 , der das Schredderprodukt der Einzugzone 2.1 des Separators 2 zuleitet (Fig. 2).

Der Separator 2 besteht aus einer umlaufend angetriebenen Hohltrommel 2.2 mit perforierter Mantelfläche, gegen welche auf einem Teil ihres Umfanges ein endloses, hochelastisches Preßband 2.3 angedrückt gehalten wird, das zwischen Seitenwänden 2.4 , 2,.5 umläuft und an der Auflaufstelle auf die Hohltrommel 2.2 die Einzugzone 2.1 bildet. Der Innenraum der Hohltrommel 2.2 ist mit einer Ableitvorrichtung 2.6 verbunden und der Ablaufbereich 2.7 des Preßbandes 2.3 mit einem Fangtrichter 2.8 , an den sich eine Rohrleitung 2.9 anschließt.

Die Rohrleitung 2.9 verbindet den Ablaufbereich 2.7 des Preßbandes 2.3 mit dem nachfolgenden Feinzerkleinerer 3 , der als Gebläsemühle ausgebildet ist.

Die Gebläsemühle 3 weist einen einseitig gelagerten Trommelrotor 3.1 auf, der, auf geeignete Weise angetrieben, umläuft. Der äußere Teil des Trommelmotors 3.1 ist als ringförmiges Gebläserad 3.3 ausgebildet und sein innerer Teil als Hohlnabe mit stegförmigen Schlagerelementen 3.3 , die bei ihrem Umlauf einen zylindrischen Raumkörper beschreiben. Zwischen dieser Umlauffläche und der inneren Umlauffläche des Gebläserades 3.2 ist ein ringförmiger Spalt 3.4 belassen, in den ein stationärer, aus einem Siebblech bestehender Siebkorb 3.5 berührungsfrei hineinragt. Der Siebkorb 3.5 hat an seinem inneren Umfang verteilte gezahnte Mahlbacken 3.6 , deren Mahlflächen sich in geringem Abstand zu der Umlauffläche der Schlagelemente 3.3 befinden.

Der Siebkorb 3.5 ist mit einer Schwenktür 3.7 in Arbeitsstellung bringbar, die gleichzeitig das Gebläserad 3.2 außen umfaßt und in Schließstellung mit der die Lagerung des Trommelrotors 3.1 aufnehmenden Gehäusewand 3.8 ein geschlossenes Gehäuse bildet.

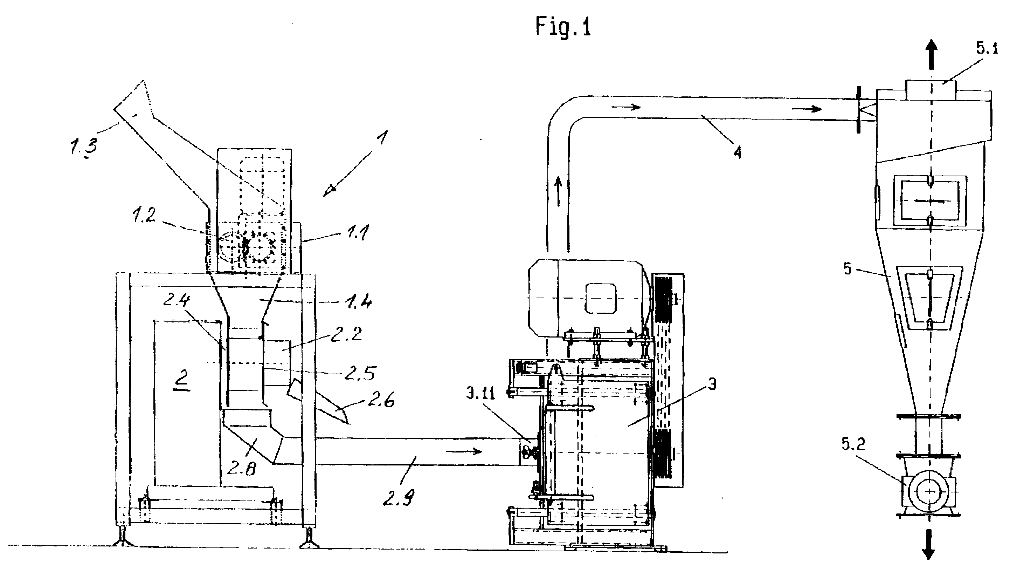

Das Gehäuse 3.9 ist mit einem tangential zu dem Gebläserad 3.2 ausgerichteten Auslaß-Rohrstutzen 3.10 versehen und hat einen in der Schwenktür 3.7 zentral angeordneten Einlaß-Rohrstutzten 3.11 (Fig. 1), an den die Rohrleitung 2.9 angeschlossen ist, so daß der Fangtrichter 2.8 des Separators 2 mit dem Innenraum des Trommelrotors 3.1 verbunden ist.

An die Gebläsemühle 3 schließt sich der Zyklon 5 üblicher Bauart an. dieser ist über die Rohrleitung mit dem Auslaß-Rohrstutzen 3.10 der Gebläsemühle 3 verbunden und in seinem oberen Bereich mit einem Abluftstutzen 5.1 sowie an seinem unteren Ende mit einer Zellenradschleuse 5.2 zur Abgabe des Endproduktes versehen.

Zum Betrieb der Einrichtung werden die zu bearbeitenden Packungseinheiten mitsamt Inhaltstoffen in den Eingabeschacht 1.3 des Vorzerkleinerers 1 gegeben und so den Walzen 1.2 dieses Gerätes zugeführt. Dabei werden die Packungseinheiten durch die Reißzähne erfaßt, eingezogen und in Grobteile zerrissen bzw. zerschnitten, wobei der Packungsinhalt freigegeben und gemeinsam mit den Packstoff-Grobteilen in den Auffangschacht 1.4 und damit in die Einzugzone 2.1 des Separators 2 gelangt. Dort wird das Stoffgemisch aus Packmittel und Inhaltstoffen zwischen Hohltrommel 2.2 und Preßband 2.3 eingezogen und einem quasi hydraulischen Druck unterworfen, unter dem die fließfähigen Inhaltstoffe durch die Perforationen hindurch in die Hohltrommel 2.2 abfließen, während die Packstoffe in den Ablaufbereich 2.7 gefordert werden. Dabei hat die Pressung des Stoffgemisches bewirkt, daß die Packstoffteile praktisch vollständig von Packungs-Inhaltstoffen befreit sind. wenn sie die Preßzone verlassen haben. Während die sich im Inneren der Hohltrommel 2.2 sammelnden Packungs-Inhaltstoffe über die Ableitvorrichtung 2.6 aus dem Prozeß ausgeschieden werden, werden die Packstoffteile in dem Fangtrichter 2.8 aufgefangen und von dort, unterstützt durch einen von der nachgeschalteten, als Feinzerkleinerer wirksamen Gebläsemühle 3 erzeugten Saugstrom, in die Rohrleitung 2.9 und damit in die Gebläsemühle 3 eingezogen. Hier gelangen die Packstoffteile in das Zentrum des Trommelrotors 3.1 , wobei sie einer Zentrifugalkraft ausgesetzt werden, die im Zusammenwirken mit dem sich in dem Trommelrotor 3.1 radial fortsetzenden Saugstrom die Packstoffteile in den Spalt zwischen den stationären Mahlbacken 3.6 und den umlaufenden Schlagelementen 3.3 einbringt, wo die weitere Zerkleinerung stattfindet. Dieser Prozeß dauert so lange fort, bis die Größe der Partikel soweit reduziert ist, daß diese den Siebkorb 3.5 passieren können. Dabei bewirkt das Gebläserad 3.2 die Weiterbeförderung des Mahlgutstromes in die Rohrleitung 4 und damit in den Zyklon 5 , von wo es beispielsweise in Säcke abgefüllt werden kann.

Die Größe der Partikel läßt sich auf einfache Weise durch Einsetzen eines entsprechend ausgeführten Siebkorbes 3.5 regulieren.

Die Rohrleitungen 2.9 und 4 können hinsichtlich der Rohrführung und/oder Formgebung so gestaltet sein, daß der durch die Gebläsemühle 3 erzeugte Luftstrom mit den einzelnen Packstoffteilen in intensivem Kontakt gehalten wird, so daß das aus dem Packstoff erzeugte und im Zyklon 5 aufgefangene Packstoffgranulat praktisch trocken anfällt. Diese Wirkungsweise macht es mögich, daß z. B. mit Alufolie versiegelte Kunststoffbehältnisse zu einem Granulat verarbeitbar sind, aus dem die Alufolienpartikel beispielsweise durch elektrostatische Sichtung praktisch vollständig abscheidbar sind.

## Patentansprüche

1. Verfahren zum Rückgewinnen von Pack- und Inhaltsstoffen, insbesondere aus mit Weichstoffen gefüllten oder benetzten Packungseinheiten, beispielsweise Lebensmittelpackungen, wie Butter-, Käse-, Joghurt-, Wurstpackungen, Packungen für Fertiggerichte u.ä. zwecks Weiter- oder Wiederverwertung der Pack- und/oder Inhaltsstoffe, gekennzeichnet durch die Schritte;
daß die Packungseinheiten samt Inhaltsstoffen in Grobpartikel zerrissen und zerschnitten werden, die im wesentlichen frei von Inhaltsstoffe einschließenden Kavernen sind, und
daß anschließend die Grobpartikel einem kontinuierlichen Druck unterworfen werden, um die Inhaltsstoffe aus den Packstoffen auszutreiben.

2. Einrichtung zum Rückgewinnen von Pack- und Inhaltsstoffen gemäß dem Verfahren nach Anspruch 1, umfassend einen Zerkleinerer (1) mit zwei um in wesentlichen horizontale und parallel verlaufende Achsen gegenläufig rotierenden Walzen (1.2) und einem den Walzen (1.2) unmittelbar nachgeschalteten Weichseparator (2) zum Austreiben der Inhaltsstoffe aus den Packungseinheiten unter Druck, dadurch gekennzeichnet, daß
die Walzen (1.2) jeweils eine Vielzahl unter Bildung von Radialnuten voneinander beabstandet angeordnete Scheiben aufweisen, die jeweils an ihrem äußeren Umfang mit Reißzähnen versehen und derart zueinander beabstandet sind, daß sie bei Rotation einander überschneiden, wobei die Reißzähne der einen Walze in die Radialnuten der anderen eintauchen, so daß auf den Scheiben befindliche Packungseinheiten durch die Reißzähne erfaßt und in die Radialnuten zwischen benachbarten Scheiben eingezogen und dabei in Grobpartikel zerschnitten und zerrissen werden.

3. Einrichtung nach Anspruch 2, **dadurch gekennzeichnet,** daß dem Weichseparator (2) ein Mahlwerk (3) zur Feinzerkleinerung der Packstoff-Grobpartikel nachgeschaltet ist.

4. Einrichtung nach Anspruch 3, **dadurch gekennzeichnet,** daß das Mahlwerk (3) eine Gebläsemühle ist, die über ein Rohrleitungssystem (2.9) mit dem Packstoff-Auslaß (2.7) des Separators (2) verbunden ist.

## Claims

1. Method for recovering packaging material and contents material, in particular from packaging units containing or covered by soft material, such as food packaging of the form of packaging for butter, cheese, yoghurt, sausage, ready-to-serve meals or the like, in order to further exploit or reuse the packaging and/or its content material, **characterized** by the steps:
that the packaging elements including their contents are torn and cut into coarse particles which are essentially devoid of caverns that trap content material, and
that subsequently the coarse particles are subjected to continuous pressure in order to expel the content material from the packaging material.

2. Apparatus for recovering packaging material and contents material according to the method of claim 1, comprising a shredder (1) having two cylinders (1.2) counter-rotating about two essentially horizontal axes extending in parallel and a soft material separator (2) arranged directly downstream of the cylinders (1.2) for expelling the content material from the packaging units under pressure, **characterized in** that the cylinders (1.2) each have a plurality of axially spaced discs forming radial grooves therebetween, which discs are provided with tearing teeth and spaced from each other such that they intersect during rotation, the tearing teeth of one cylinder penetrating into the radial grooves of the other such that packaging units present on the discs are seized by the tearing teeth and drawn into the radial grooves between adjacent discs and thereby cut and torn into coarse particles.

3. Apparatus according to claim 2, **characterized in** that a grinding apparatus (3) for finely fragmenting said packaging material coarse particles is arranged downstream of said soft material separator (2).

4. Apparatus according to claim 3, **characterized in** that the grinding apparatus (3) is a blower mill that is connected to the packaging material outlet (2.7) of the separator (2) by means of a conduit system (2.9).

## Revendications

1. Procédé de récupération de matériaux d'emballage et de produits emballés, en particulier à partir d'unités d'emballage remplies ou mouillées de substances molles, par exemple des emballages pour produits alimentaires, tels que des emballages de beurre, de fromage, de yaourt, de saucisses, des conditionnements pour plats préparés, etc., à des fins de réutilisation ou de recyclage des matériaux d'emballage et/ou des produits emballés, caractérisé par les étapes selon lesquelles les unités d'emballage, y compris les produits emballés, sont déchiquetés et découpés en particules grossières, qui pour l'essentiel sont exemptes de vides contenant les produits emballés, puis les particules grossières sont soumises à une pression continue, pour expulser des matériaux d'emballage les produits emballés.

2. Equipement pour récupérer des matériaux d'emballage et produits emballés selon le procédé de la revendication 1, qui comporte un concasseur (1), ayant des cylindres (1.2) tournant en sens contraires autour d'axes courant d'une manière essentiellement horizontale et parallèle, ainsi qu'un séparateur (2) de substances molles, installé immédiatement en aval des cylindres (1.2), pour expulser sous pression les produits emballés des unités d'emballage, caractérisé en ce que chacun des cylindres (1.2) comporte un grand nombre de disques, disposés à une certaine distance les uns des autres en formant des gorges radiales, disques dont chacun est, sur sa circonférence extérieure, muni de dents d'arrachage, et qui sont écartés les uns des autres de façon à se chevaucher les uns les autres lors d'une rotation, les dents d'arrachage de l'un des cylindres pénétrant dans les gorges radiales de l'autre, de façon que les unités d'emballage se trouvant sur les disques soient saisies par les dents d'arrachage et soient insérées dans les gorges radiales entre des disques voisins, en étant à cette occasion déchiquetées et découpées en particules grossières.

3. Equipement selon la revendication 2, caractérisé en ce qu'un broyeur, destiné au broyage fin des particules grossières du matériau d'emballage, est installé en aval du séparateur (2) de produits mous.

4. Equipement selon la revendication 3, caractérisé en ce que le broyeur (3) est un broyeur à soufflante, qui par l'intermédiaire d'un système de tuyauteries (2.9) communique avec l'orifice (2.7) de sortie du matériau d'emballage du séparateur (2).
